# EUROPEAN PATENT APPLICATION

(11) **EP 4 531 442 A1**
(43) Date of publication of application: **02.04.2025**
(21) Application number: 23848946.2
(22) Date of filing: 27.04.2023
(51) Int. Cl.: H04W 4/06

(54) **COMMUNICATION METHOD AND APPARATUS, AND COMMUNICATION NODE AND STORAGE MEDIUM**

(30) Priority: 03.08.2022 CN 202210928946
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); LU, Ting, Shenzhen, Guangdong 518057 (CN); GAO, Yuan, Shenzhen, Guangdong 518057 (CN)
(74) Representative: Aipex B.V.
(86) International application number: PCT/CN2023/091108
(87) International publication number: WO 2024/027235

(57) **Abstract**

Provided are a communication method and apparatus, a communication node and a storage medium. The communication method includes: sending a first broadcast message to a terminal, where the first broadcast message includes at least one of the following: a message type, terminal selection information or resource indication information; and receiving a response message, which is sent by one or more target terminals and in response to the first broadcast message, on a resource indicated by the resource indication information, where the response message includes at least one of the following: a message type or terminal information.

## Description

### TECHNICAL FIELD

The present application relates to the field of communications, for example, a communication method and apparatus, a communication node and a storage medium.

### BACKGROUND

The communication process between a radio-frequency identification (RFID) tag and an accessor can be divided into three phases: selection, inventory, and access. 1) Selection: This phase is the process in which the accessor selects an RFID tag for the subsequent inventory process or verifies an RFID tag for the subsequent authentication process. 2) Inventory: This phase is the process in which the accessor identifies RFID tags. The accessor starts to perform inventory according to an inventory command, and one or more RFID tags may respond. When multiple RFID tags respond at the same time, a conflict may be caused, and the accessor may not be able to identify a response command. The accessor solves the conflict according to the inventory command and identifies the tags one by one. 3) Access: This stage is the process in which the accessor processes tags. The accessor individually and uniquely identifies the tag before accessing. The access process contains several access commands such as a read command, a write command, a lock command and the like.

When an RFID tag is accessed by a base station, the coverage of the base station becomes larger, and the base station needs to identify more tags, so the inventory process needs to be more efficient.

### SUMMARY

The present application provides a communication method and apparatus, a communication node and a storage medium to effectively solve terminal conflict such that the base station can identify more terminals with higher identification efficiency.

In a first aspect, an embodiment of the present application provides a communication method. The communication method is applied to a base station and includes the following.

A first broadcast message is sent to a terminal, where the first broadcast message includes at least one of the following: a message type, terminal selection information or resource indication information; and a response message, which is sent by one or more target terminals and in response to the first broadcast message, on a resource indicated by the resource indication information is received, where the response message includes at least one of the following: a message type or terminal information.

In a second aspect, an embodiment of the present application further provides a communication method. The communication method is applied to a terminal and includes the following.

A first broadcast message sent by a base station is received, where the first broadcast message includes at least one of the following: a message type, terminal selection information or resource indication information; and if terminal information of the terminal matches the terminal selection information, a response message is sent to the base station on a resource indicated by the resource indication information, where the response message included at least one of the following: a message type or terminal information.

In a third aspect, an embodiment of the present application further provides a communication apparatus. The communication apparatus includes a first sending module and a first receiving module. The first sending module is configured to send a first broadcast message to a terminal, where the first broadcast message includes at least one of the following: a message type, terminal selection information or resource indication information. The first receiving module is configured to receive a response message, which is sent by one or more target terminals and in response to the first broadcast message, on a resource indicated by the resource indication information, where the response message includes at least one of the following: a message type or terminal information.

In a fourth aspect, an embodiment of the present application further provides a communication apparatus. The communication apparatus includes a second sending module and a second receiving module. The second receiving module is configured to receive a first broadcast message sent by a base station, where the first broadcast message includes at least one of the following: a message type, terminal selection information or resource indication information. The second sending module is configured to, if terminal information of the terminal matches the terminal selection information, send a response message to the base station on a resource indicated by the resource indication information, where the response message includes at least one of the following: a message type or terminal information.

In a fifth aspect, an embodiment of the present application provides a communication node. The communication node includes a storage apparatus.

The storage apparatus is configured to store one or more programs, and the one or more programs, when executed by the one or more processors, cause the one or more processors to implement the communication method described in the first aspect and the second aspect of the present application.

In a sixth aspect, an embodiment of the present application provides a storage medium. The storage medium is configured to store a computer program, and the computer program, when executed by a processor, causes the processor to implement any communication method in the embodiments of the present application.

### BRIEF DESCRIPTION OF DRAWINGS

FIG. 1 is a first flowchart of a communication method according to an embodiment of the present application;
FIG. 2 is a second flowchart of a communication method according to an embodiment of the present application;
FIG. 3 is a third flowchart of a communication method according to an embodiment of the present application;
FIG. 4 is a fourth flowchart of a communication method according to an embodiment of the present application;
FIG. 5 is a fifth flowchart of a communication method according to an embodiment of the present application;
FIG. 6 is a six flowchart of a communication method according to an embodiment of the present application;
FIG. 7 is a first structure diagram of a communication apparatus according to an embodiment of the present application;
FIG. 8 is a second structure diagram of a communication apparatus according to an embodiment of the present application; and
FIG. 9 is a structure diagram of a communication node according to an embodiment of the present application.

### DETAILED DESCRIPTION

Embodiments of the present application will be described below in conjunction with drawings.

The steps illustrated in the flowcharts among the drawings may be performed by, for example, a computer system capable of executing a set of computer-executable instructions. Moreover, although logical sequences are illustrated in the flowcharts, in some cases, the illustrated or described steps may be performed in sequences different from those described herein.

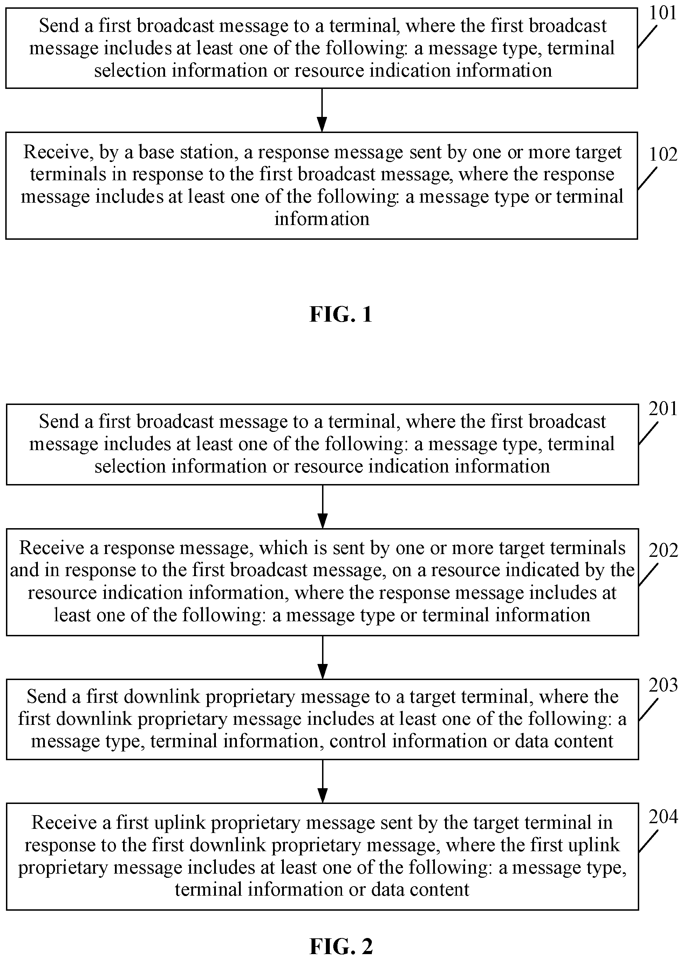

FIG. 1 is a first flowchart of a communication method according to an embodiment of the present application. The method may be executed by a communication apparatus or a base station. The communication apparatus or the base station may be implemented by software and/or hardware and may be integrated into any intelligent device having a network communication function. As shown in FIG. 1, the communication method may include S101 and S102.

In S101, a first broadcast message is sent to a terminal, where the first broadcast message includes at least one of the following: a message type, terminal selection information or resource indication information.

In a specific embodiment of the present application, the base station may send the first broadcast message to the terminal. The first broadcast message includes at least one of the following: a message type, terminal selection information or resource indication information. Further, the first broadcast message may include a preamble sequence and check information. The resource indication information in the embodiment of the present application is used for informing the terminal of the resource on which the terminal sends a response message to solve a terminal conflict. In an embodiment, the resource indication information may be information through which the base station indicates a frequency domain-related resource to the terminal. In an embodiment, the resource indication information may include a frequency interval of a sub-carrier or a frequency interval of a sub-channel, an available sub-carrier range or an available sub-channel range, information related to a time domain for sending a response message, a format of a response message, and a modulation and coding scheme of a response message.

When the number of terminals is huge, the base station needs to identify these terminals one by one, so the inventory process is necessary. Moreover, these terminals perform passive communications, and the base station needs to trigger these terminals to report their information. Therefore, the base station may send terminal selection information by sending one broadcast message to select some terminals. The format of the broadcast message may be preamble sequence + message type + terminal selection information + check information. The base station may then send inventory information by sending another broadcast message to trigger the inventory process. The format of the broadcast message may be preamble sequence + message type + inventory information + check information. In addition, the base station may also send the terminal selection information and the inventory information at the same time by sending one broadcast message. The format of the broadcast message may be preamble sequence + message type + terminal selection information + inventory information + check information. The broadcast message in the embodiment of the present application has the function of terminal selection and/or the function of inventory trigger. When the base station sends a broadcast message to a terminal, all the terminals within the coverage of the base station can receive the broadcast message, and if a terminal satisfies the selection condition, then the terminal sends a response message to the base station, where the response message may be a paging message.

In S102, the base station receives a response message sent by one or more target terminals in response to the first broadcast message, where the response message includes at least one of the following: a message type or terminal information.

In a specific embodiment of the present application, after the terminal receives the first broadcast message carrying terminal selection information, the terminal sends the response message to the base station if the terminal satisfies the response condition. The response message may include at least one of the following: a message type or terminal information. Furthermore, the response message may also include a preamble sequence and check information. In an embodiment, the format of the response message is preamble sequence + message type + terminal information + check information. In an embodiment, if the base station detects that one or more target terminals conflict with each other based on the response message, the base station may send the first broadcast message to the terminal again, and the above operations are repeated until the one or more target terminals no longer conflict with each other.

In an embodiment, after the base station and a target terminal have completed the identification, the base station may send a first downlink proprietary message to the target terminal to inform the target terminal that the response message has been successfully received, thereby completing the identification process. If the base station has downlink data, the base station may also send the downlink data to the target terminal or request the target terminal to report data. The first downlink proprietary message in the embodiment of the present application includes at least one of the following: a message type, terminal information, control information or data content. Further, the first downlink proprietary message may also include a preamble sequence and check information. In an embodiment, the format of the first downlink proprietary message is preamble sequence + message type + terminal information + control information + data content + check information. After the base station and the target terminal complete the identification, the target terminal may send a first uplink proprietary message to the base station to report data according to the requirements of the base station. The first uplink proprietary message in the embodiment of the present application includes at least one of the following: a message type, terminal information or data content. Further, the first uplink proprietary message may also include a preamble sequence and check information. In an embodiment, the format of the first uplink proprietary message is preamble sequence + message type + terminal information + data content + check information.

In the communication method provided in the embodiment of the present application, the base station first sends a first broadcast message to a terminal, where the first broadcast message includes at least one of the following: a message type, terminal selection information or resource indication information, and then the base station receives a response message, which is sent by one or more target terminals and in response to the first broadcast message, on a resource indicated by the resource indication information. That is, in the solution of the present application, the base station may carry the terminal selection information and the resource indication information when sending a broadcast message to the terminal such that the terminal, when receiving the broadcast message, may first detect whether the terminal information of the terminal matches the terminal selection information carried in the first broadcast message. If the terminal information matches the terminal selection information, the terminal sends a response message to the base station. If the terminal information does not match the terminal selection information, the terminal does not send the response message to the base station. The terminal may also send the response message on a resource indicated by the resource indication information. In the related art, an accessor solves the conflict through an inventory command to identify tags one by one, and the inventory process is inefficient. Therefore, compared with the related art, the communication method provided in the embodiment of the present application can effectively solve terminal conflict such that the base station can identify more terminals with higher identification efficiency. Moreover, the solution of the embodiment of the present application is simple and convenient to implement, is easy to popularize and can be broadly applied.

FIG. 2 is a second flowchart of a communication method according to an embodiment of the present application. The embodiment is further optimized and extended on the basis of the solution described above and can be combined with the optional implementations described above. As shown in FIG. 2, the communication method may include S201 to S204.

In S201, a first broadcast message is sent to a terminal, where the first broadcast message includes at least one of the following: a message type, terminal selection information or resource indication information.

In S202, a response message, which is sent by one or more target terminals and in response to the first broadcast message, on a resource indicated by the resource indication information is received, where the response message includes at least one of the following: a message type or terminal information.

In S203, a first downlink proprietary message is sent to a target terminal, where the first downlink proprietary message includes at least one of the following: a message type, terminal information, control information or data content.

In S204, a first uplink proprietary message sent by the target terminal in response to the first downlink proprietary message is received, where the first uplink proprietary message includes at least one of the following: a message type, terminal information or data content.

In a specific embodiment of the present application, the base station may first send the first downlink proprietary message to one target terminal, and if the base station receives the first uplink proprietary message sent by the target terminal and does not have downlink data, the base station may access the next target terminal. If the base station does not receive the first uplink proprietary message sent by the target terminal, the base station may re-send the first downlink proprietary message to the target terminal.

In the communication method provided in the embodiment of the present application, the base station first sends a first broadcast message to a terminal, where the first broadcast message includes at least one of the following: a message type, terminal selection information or resource indication information, and then the base station receives a response message, which is sent by one or more target terminals and in response to the first broadcast message, on a resource indicated by the resource indication information. That is, in the solution of the present application, the base station may carry the terminal selection information and the resource indication information when sending a broadcast message to the terminal such that the terminal, when receiving the broadcast message, may first detect whether the terminal information of the terminal matches the terminal selection information carried in the first broadcast message. If the terminal information matches the terminal selection information, the terminal sends a response message to the base station. If the terminal information does not match the terminal selection information, the terminal does not send the response message to the base station. When the terminal sends the response message to the base station, the terminal may send the response message on a resource indicated by the resource indication information. In the related art, an accessor solves the conflict through an inventory command to identify tags one by one, and the inventory process is inefficient. Therefore, compared with the related art, the communication method provided in the embodiment of the present application can effectively solve terminal conflict such that the base station can identify more terminals with higher identification efficiency. Moreover, the solution of the embodiment of the present application is simple and convenient to implement, is easy to popularize and can be broadly applied.

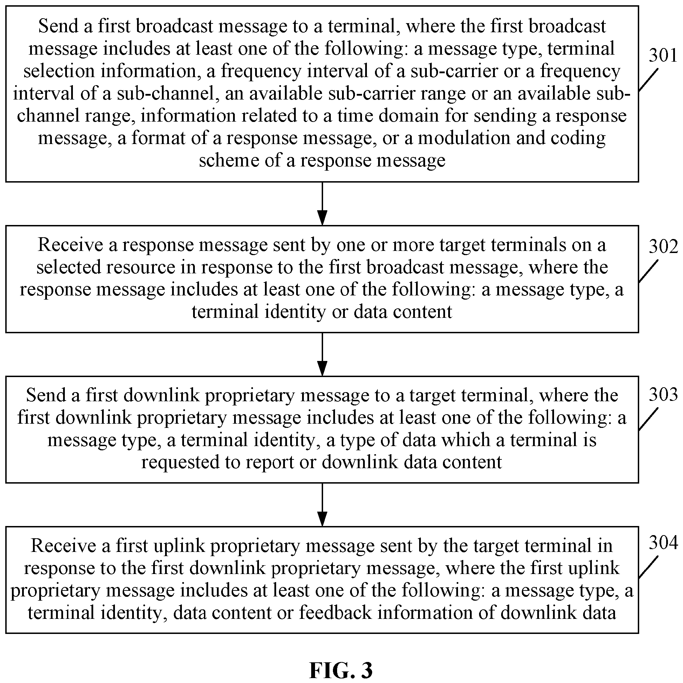

FIG. 3 is a third flowchart of a communication method according to an embodiment of the present application. The embodiment is further optimized and extended on the basis of the solutions described above and can be combined with the optional implementations described above. As shown in FIG. 3, the communication method may include S301 to S304.

In S301, a first broadcast message is sent to a terminal, where the first broadcast message includes at least one of the following: a message type, terminal selection information, a frequency interval of a sub-carrier or a frequency interval of a sub-channel, an available sub-carrier range or an available sub-channel range, information related to a time domain for sending a response message, a format of a response message, or a modulation and coding scheme of a response message.

Although the inventory process is based on time-division multiplexing (TDM), the terminal may support multi-carrier technology or multi-frequency domain technology, so the inventory process may be based on frequency-division multiplexing (FDM). It is assumed that an air interface resource has multiple available sub-carriers or sub-channels. The base station sends a first broadcast message. The first broadcast message may include: a message type, for indicating what the message is, for example, the message is a broadcast message; terminal selection information, for example, an identity of the terminal or a part of the identity; a frequency interval of a sub-carrier or a frequency interval of a sub-channel; an available sub-carrier range or an available sub-channel range, for example, sub-carriers or sub-channels that are idle, the total number of sub-carriers or sub-channels, or a bitmap of the idle sub-carriers or sub-channels; information related to a time domain for sending a response message, for example, a delay range for the feedback of a response message; a format of a response message, for example, the content to be carried by a response message; or a modulation and coding scheme of a response message.

In an embodiment, the base station sends a second broadcast message to the terminal, where the second broadcast message includes at least one of the following: a message type, terminal selection information or resource indication information.

In an embodiment, the base station sends a second downlink proprietary message to a target terminal, where the second downlink proprietary message includes at least one of the following: a message type, a terminal identity, a random number generated by a terminal or a type of data which a terminal is requested to report; and the base station receives a second uplink proprietary message sent by the target terminal in response to the second downlink proprietary message, where the second uplink proprietary message includes at least one of the following: a message type, a terminal identity, data content or a designated sub-carrier or a designated sub-channel.

In an embodiment, the first broadcast message, the second broadcast message, the first downlink proprietary message or the second downlink proprietary message is a downlink signal, and the response message, the first uplink proprietary message or the second uplink proprietary message is an uplink signal. The downlink signal is a signal which is sent by the base station on a downlink carrier or a downlink channel and received by a terminal on the downlink carrier or the downlink channel. The uplink signal is a signal which is sent by a terminal on an uplink sub-carrier or an uplink sub-channel and received by the base station on the uplink sub-carrier or the uplink sub-channel. A bandwidth of the downlink carrier or a bandwidth of the downlink channel is greater than or equal to a bandwidth of the uplink sub-carrier or a bandwidth of the uplink sub-channel. A center frequency point of the downlink carrier or a center frequency point of the downlink channel is the same as or different from a center frequency point of the uplink sub-carrier or a center frequency point of the uplink sub-channel.

In an embodiment, the first broadcast message or the second broadcast message is a broadcast message signal, the first downlink proprietary message or the second downlink proprietary message is a downlink proprietary signal, and the response message, the first uplink proprietary message or the second uplink proprietary message is an uplink signal. The bandwidth of a downlink carrier or a downlink channel of the broadcast message signal is greater than or equal to the bandwidth of a downlink carrier or a downlink channel of the downlink proprietary signal. The center frequency point of the broadcast message signal is the same as or different from the center frequency point of the downlink proprietary signal. The bandwidth of the downlink carrier or the downlink channel of the broadcast message signal is greater than or equal to the bandwidth of a sub-carrier or a sub-channel of the uplink signal. The center frequency point of the broadcast message signal is the same as or different from the center frequency point of the uplink signal.

In an embodiment, when the base station sends a downlink signal on a downlink carrier or a downlink channel and the terminal receives the downlink signal on the downlink carrier or the downlink channel and sends an uplink signal on an uplink sub-carrier or an uplink sub-channel, the base station may designate a sub-carrier or a sub-channel for the terminal. The bandwidth of the downlink carrier or the downlink channel may be greater than or equal to the bandwidth of the uplink sub-carrier or the uplink sub-channel, and the center frequency point of the downlink carrier or the downlink channel may be different from the center frequency point of the uplink sub-carrier or the uplink sub-channel. The base station may send the first broadcast message on the downlink carrier or the downlink channel, and the first broadcast message may carry an available sub-carrier range or an available sub-channel range for the feedback of a response message and information related to the time domain for sending a response message. After the terminal receives the first broadcast message, the terminal randomly selects an available sub-carrier or an available sub-channel according to the sub-carrier-related or sub-channel-related information in the first broadcast message and selects an occasion for feeding back a response message according to the information related to the time domain for sending a response message. The terminal feeds back a response message at the selected sub-carrier or sub-channel and on the selected occasion. The base station receives the response message, sends a first downlink proprietary message on the downlink carrier or the downlink channel to a terminal and may designate a sub-carrier or a sub-channel for the terminal in the first downlink proprietary message. The terminal which receives the first downlink proprietary message feeds back a first uplink proprietary message on the designated sub-carrier or the designated sub-channel.

In S302, a response message sent by one or more target terminals on a selected resource in response to the first broadcast message is received, where the response message includes at least one of the following: a message type, a terminal identity or data content.

In a specific embodiment of the present application, after the terminal receives the first broadcast message and if the information of the terminal satisfies the content in the terminal selection information, for example, information of a selected terminal, the terminal may select a resource for responding and send a response message on the resource. The response message includes at least one of the following: a message type, for indicating what the message is, for example, the message is a response message; a terminal identity, for example, an identity of the terminal or a part of the identity; or data content, for example, data to be reported by the terminal.

In S303, a first downlink proprietary message is sent to a target terminal, where the first downlink proprietary message includes at least one of the following: a message type, a terminal identity, a type of data which a terminal is requested to report or downlink data content.

In a specific embodiment of the present application, the base station may send to the target terminal the first downlink proprietary message which is specific to the target terminal, where the first downlink proprietary message includes at least one of the following: a message type; a terminal identity, for example, a terminal identity reported by a terminal; a type of data which a terminal is requested to report; or downlink data content, for example, a write command.

In S304, a first uplink proprietary message sent by the target terminal in response to the first downlink proprietary message is received, where the first uplink proprietary message includes at least one of the following: a message type, a terminal identity, data content or feedback information of downlink data.

In a specific embodiment of the present application, after the target terminal receives the first downlink proprietary message, the target terminal reports data through the first uplink proprietary message according to the content of the first downlink proprietary message. The first uplink proprietary message includes at least one of the following: a message type; a terminal identity, for example, an identity of the terminal or a part of the identity; data content, for example, a feedback message of a write command; or feedback information of downlink data. If the base station receives the first uplink proprietary message sent by the target terminal and has no downlink data to be sent to the target terminal, the base station may access the next terminal. If the base station does not receive the first uplink proprietary message sent by the target terminal, the base station may re-send the first downlink proprietary message to the target terminal. For example, the base station selects a terminal through the first broadcast message to trigger the inventory process. After the terminal receives the first broadcast message, the terminal selects a resource (including a frequency-domain resource and a time-domain resource) for sending a response message according to the first broadcast message and feeds back the response message. After the base station receives the response message and if the base station has downlink data to be sent to the terminal, the first downlink proprietary message sent by the base station to the terminal may carry the downlink data; if the base station has no downlink data to be sent to the terminal, the first downlink proprietary message sent by the base station to the terminal may not carry downlink data. If the base station needs the terminal to feed back uplink data, the first downlink proprietary message may also carry the type of data which the terminal is requested to report. If the base station neither has downlink data to be sent to the terminal nor needs the terminal to feed back uplink data, the base station may terminate the process.

In the communication method provided in the embodiment of the present application, the base station first sends a first broadcast message to a terminal, where the first broadcast message includes at least one of the following: a message type, terminal selection information or resource indication information, and then the base station receives a response message, which is sent by one or more target terminals and in response to the first broadcast message, on a resource indicated by the resource indication information. That is, in the solution of the present application, the base station may carry the terminal selection information and the resource indication information when sending a broadcast message to the terminal such that the terminal, when receiving the broadcast message, may first detect whether the terminal information of the terminal matches the terminal selection information carried in the first broadcast message. If the terminal information matches the terminal selection information, the terminal sends a response message to the base station. If the terminal information does not match the terminal selection information, the terminal does not send the response message to the base station. The terminal may also send the response message on a resource indicated by the resource indication information. In the related art, an accessor solves the conflict through an inventory command to identify tags one by one, and the inventory process is inefficient. Therefore, compared with the related art, the communication method provided in the embodiment of the present application can effectively solve terminal conflict such that the base station can identify more terminals with higher identification efficiency. Moreover, the solution of the embodiment of the present application is simple and convenient to implement, is easy to popularize and can be broadly applied.

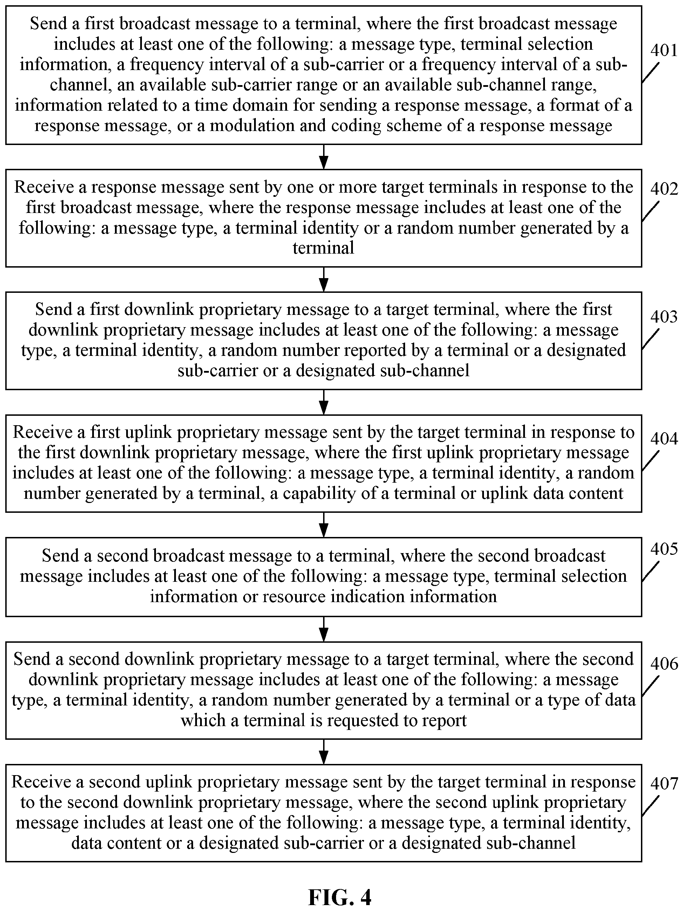

FIG. 4 is a fourth flowchart of a communication method according to an embodiment of the present application. The embodiment is further optimized and extended on the basis of the solutions described above and can be combined with the optional implementations described above. As shown in FIG. 4, the communication method may include S401 to S407.

In S401, a first broadcast message is sent to a terminal, where the first broadcast message includes at least one of the following: a message type, terminal selection information, a frequency interval of a sub-carrier or a frequency interval of a sub-channel, an available sub-carrier range or an available sub-channel range, information related to a time domain for sending a response message, a format of a response message, or a modulation and coding scheme of a response message.

Although the inventory process is based on TDM, the terminal may support multi-carrier technology or multi-frequency domain technology, so the inventory process may be based on FDM or FDM + TDM. It is assumed that an air interface resource has multiple available sub-carriers or sub-channels. The base station sends the first broadcast message. The first broadcast message includes at least one of the following: a message type, for indicating what the message is, for example, the message is a broadcast message; terminal selection information, for example, an identity of the terminal or a part of the identity; a frequency interval of a sub-carrier or a frequency interval of a sub-channel; an available sub-carrier range or an available sub-channel range, for example, sub-carriers or sub-channels that are idle, the total number of sub-carriers or sub-channels, or a bitmap of the idle sub-carriers or sub-channels; information related to a time domain for sending a response message, for example, a delay range for the feedback of a response message; a format of a response message, for example, the content to be carried by a response message; or a modulation and coding scheme of a response message.

In S402, a response message sent by one or more target terminals in response to the first broadcast message is received, where the response message includes at least one of the following: a message type, a terminal identity or a random number generated by a terminal.

In a specific embodiment of the present application, after each terminal receives the first broadcast message and if the information of the terminal satisfies the content in the terminal selection information, for example, information of a selected terminal the terminal may select a resource for feeding back a response message according to inventory information, including a frequency-domain resource and a time-domain resource. If the sending occasion selected by the terminal is not the current occasion, the terminal needs to wait for the base station to send a second broadcast message carrying the inventory information. If the sending occasion selected by the terminal is the current occasion, the terminal feeds back the response message on the selected resource. The response message includes at least one of the following: a message type; a terminal identity, for example, an identity of the terminal or a part of the identity; or a random number generated by the terminal, for example, RN16.

In S403, a first downlink proprietary message is sent to a target terminal, where the first downlink proprietary message includes at least one of the following: a message type, a terminal identity, a random number reported by a terminal or a designated sub-carrier or a designated sub-channel.

In a specific embodiment of the present application, if the base station successfully receives the response message from a target terminal, it means that the base station identifies the target terminal. The base station may then send the first downlink proprietary message to the target terminal, where the first downlink proprietary message includes at least one of the following: a message type; a terminal identity, for example, a terminal identity reported by the terminal; a random number reported by the terminal; or a designated sub-carrier or a designated sub-channel, for example, an index of the sub-carrier or the sub-channel, or a bitmap.

In S404, a first uplink proprietary message sent by the target terminal in response to the first downlink proprietary message is received, where the first uplink proprietary message includes at least one of the following: a message type, a terminal identity, a random number generated by a terminal, a capability of a terminal or uplink data content.

In a specific embodiment of the present application, when a terminal receives the first downlink proprietary message, it can be considered that the base station has identified the terminal. The terminal may then send the first uplink proprietary message, where the first uplink proprietary message includes at least one of the following: a message type, a terminal identity, a random number generated by the terminal, a capability of the terminal, or uplink data content, for example, the data to be reported by the terminal.

In S405, a second broadcast message is sent to a terminal, where the second broadcast message includes at least one of the following: a message type, terminal selection information or resource indication information.

In S406, a second downlink proprietary message is sent to a target terminal, where the second downlink proprietary message includes at least one of the following: a message type, a terminal identity, a random number generated by a terminal or a type of data which a terminal is requested to report.

In S407, a second uplink proprietary message sent by the target terminal in response to the second downlink proprietary message is received, where the second uplink proprietary message includes at least one of the following: a message type, a terminal identity, data content or a designated sub-carrier or a designated sub-channel.

In a specific embodiment of the present application, the target terminal receives the second downlink proprietary message and reports data through the second uplink proprietary message according to the content of the second downlink proprietary message. The second uplink proprietary message includes at least one of the following: a message type, a terminal identity, data content or a designated sub-carrier or a designated sub-channel, where the terminal identity may be an identity of the terminal or a part of the identity, and the data content may be a feedback message of a write command. The second downlink proprietary message and the second uplink proprietary message in the embodiment of the present application may further include a preamble sequence and check information.

In a specific embodiment of the present application, if the base station receives the first uplink proprietary message or the second uplink proprietary message sent by the target terminal and has no downlink data to be sent to the target terminal, the base station may perform inventory and access on the next terminal. For example, the base station may send a second broadcast message or a third broadcast message. If the base station does not receive the first uplink proprietary message or the second uplink proprietary message, the base station may re-send the first downlink proprietary message or the second downlink proprietary message. The base station sends a second broadcast message or a third broadcast message. The second broadcast message or the third broadcast message includes at least one of the following: a message type; information of a selected terminal, for example, an identity of the terminal or a part of the identity; a state of a terminal; a frequency interval of a sub-carrier or a frequency interval of a sub-channel; an available sub-carrier range or an available sub-channel range, for example, sub-carriers or sub-channels that are idle, the total number of sub-carriers or sub-channels, or a bitmap of the idle sub-carriers or sub-channels; information related to a time domain for sending a response message, for example, a decrease or increase in a delay range for the feedback of a response message; a format of a response message, for example, the content to be carried by a response message; or a modulation and coding scheme of a response message. For example, the base station selects a terminal through the first broadcast message to trigger the inventory process. After the target terminal receives the first broadcast message, the target terminal selects a resource (including a frequency-domain resource and a time-domain resource) for sending a response message according to the first broadcast message and feeds back the response message. After the base station receives the response message, the base station may send the first downlink proprietary message to the target terminal. After the target terminal receives the first downlink proprietary message, the target terminal feeds back the first uplink proprietary message, thereby completing the mutual identification of the base station and the target terminal. If the base station has downlink data to be sent to the target terminal, the first downlink proprietary message may also carry the downlink data. If the base station has no downlink data to be sent to the target terminal, the second downlink proprietary message may not carry the downlink data. If the base station needs the target terminal to feed back uplink data, the second downlink proprietary message may also carry the type of data which the target terminal is requested to report. If the base station neither has downlink data to be sent to the target terminal nor needs the target terminal to feed back uplink data, the base station may terminate the process.

In an embodiment, the base station may also send an acknowledgement message to the target terminal, where the acknowledgement message is an acknowledgement of the response message, the first uplink proprietary message or the second uplink proprietary message from the base station. In the inventory process, for example, the base station sends the first broadcast message, and the target terminal may feed back the response message on different occasions or in different frequency-domain resources according to the first broadcast message. If a terminal conflict occurs, the target terminal waits for the base station to re-send the first broadcast message carrying the inventory information to solve the conflict. When the conflict of the target terminal is solved, the target terminal feeds back the response message to the base station. For example, the response message may carry a random code. The target terminal receives the first downlink proprietary message sent by the base station. For example, the first downlink proprietary message may carry the random code reported by the target terminal in the response message. The target terminal may then acknowledge that the base station has received the response message, and the identification of the base station and the target terminal has also been completed. The target terminal feeds back the first uplink proprietary message to the base station. For example, the first uplink proprietary message may carry an identity of the terminal. In the above process, if the one or more target terminals make an error or the one or more target terminals do not receive an acknowledgement message from the base station within a predetermined duration, the one or more target terminals should wait for the base station to re-send the first broadcast message or the first downlink proprietary message, and the base station needs to re-perform an inventory operation on the one or more target terminals. First, the target terminal makes an error or does not receive an acknowledgement message from the base station in the following case: the target terminal sends the response message to the base station but does not receive the first downlink proprietary message from the base station over a period of time; or, the target terminal sends the first uplink proprietary message to the base station but does not receive the acknowledgement message from the base station over a period of time. The target terminal may wait for the base station to re-send the first broadcast message or the first downlink proprietary message in a predetermine manner: the terminal enters a first state, where the first state is inconsistent with a state of the terminal when the terminal first receives the first broadcast message or the first state is inconsistent with a state of a terminal which does not make an error or receives the acknowledgement message within the predetermined duration; the terminal enters a second state, where a frequency-domain resource or a time-domain resource occupied by the terminal for sending the response message in the second state is inconsistent with a frequency-domain resource or a time-domain resource occupied for sending the response message by a terminal which does not make an error or receives the acknowledgement message within the predetermined duration; or an inventory identity is set in the second state, where the inventory identity is inconsistent with an inventory identity of a terminal which does not make an error or receives the acknowledgement message within the predetermined duration.

To avoid conflict with the terminal currently being inventoried, the base station needs to inventory the above terminal in the following manner. The base station may send the second broadcast message carrying terminal selection information and only performs selection on the terminal with a first state. When the base station sends the second broadcast message carrying the terminal selection information, the state of a selected terminal is A. For example, the terminal selection information may carry an indication bit of the state of the selected terminal, and the indication bit is set to A. For example, the base station sends the first broadcast message, and the state of the selected terminal is set to B. In the inventory process, the terminal does not receive a first downlink proprietary message or a completion message sent by the base station, and the state of the terminal is set to A. When the base station sends the second broadcast message, the second broadcast message may carry the terminal selection information, and the state of the selected terminal is A. In this way, the terminal with the state A is selected to perform the following processes such as the inventory and access processes. Alternatively, the base station may send the second broadcast message carrying inventory information of the state of the selected terminal and only perform inventory on the terminal with the state A. When the base station sends the second broadcast message carrying the inventory information, the state of the selected terminal in the inventory information is A. For example, the inventory information carries an indication bit of the state of the selected terminal, and the indication bit is set to A. For example, the base station sends the first broadcast message, and the state of the selected terminal set is set to B. In the inventory process, the terminal does not receive the first downlink proprietary message or a completion message sent by the base station, and the state of the selected terminal is set to A. When the base station sends the second broadcast message, the second broadcast message carries the inventory information, and the state of the selected terminal is A. In this way, the terminal with the state A is selected to perform the following processes such as the inventory and access processes. Alternatively, the base station may inventory the above terminal in different time domains or different frequency domains. For example, the base station sends the first broadcast message, and the selected terminal selects according to the inventory information in the first broadcast message a time-domain resource or a frequency-domain resource for feeding back a response message. In the inventory process, the terminal does not receive the first downlink proprietary message or the completion message sent by the base station, and the terminal re-selects a time-domain resource or a frequency-domain resource for feeding back a response message; or, when the base station sends a second broadcast message, the terminal re-selects a time-domain resource or a frequency-domain resource for feeding back a response message. Alternatively, the base station may also only perform inventory on the terminal set with an identity. When the base station sends inventory information, an inventory information identity is sent. For example, the inventory information may carry an indication bit of an identity of a selected terminal, and the indication bit is set to G or 0. For example, the base station sends the first broadcast message, the state of the selected terminal is set to B, and the inventory identity is set to E. In the inventory process, the terminal does not receive the first downlink proprietary message or the completion message sent by the base station, and the state of the terminal is set to B, and the inventory identity is F. When the base station sends the second broadcast message, the second broadcast message carries the inventory information, and the inventory identity of the selected terminal is F. In this way, the terminal with the inventory identity F is selected to perform the following processes such as the inventory and access processes.

In an embodiment, when the base station receives the response message or the first uplink proprietary message sent by the target terminal, the base station may send to the target terminal a completion message corresponding to the response message or a completion message corresponding to the first uplink proprietary message. In a specific embodiment of the present application, in the access process, the base station sends the first downlink proprietary message, for example, a read message, to the terminal, and the terminal completes the message according to the first downlink proprietary message and feeds back an uplink proprietary message, for example, a response message of the read message, to the base station. Alternatively, in the inventory process, the base station sends a downlink proprietary message to the terminal, and the terminal sends an uplink proprietary message to the base station. Considering that the terminal is unable to determine whether the base station has received the response message from the terminal, a completion message from the base station may be introduced in the embodiment of the present application, and the completion message may include an identity of the terminal, for example, an Electronic Product Code (EPC); information reported by the terminal, for example, a random number reported by the terminal; and an indication bit of a result, for example, a success or a failure. If the terminal receives the completion message, the terminal considers a process successful: if the process is the inventory process and the terminal receives the completion message, the terminal considers the inventory process successful and sets the state of the terminal to an inventory completion state or an access state; if the process is the access process and the terminal receives the completion message, the terminal considers the access process successful, sets the state of the terminal to an access completion state or an idle state, and identifies the process as an access completion process. In addition, if the terminal does not receive the completion message over a period of time, the terminal considers a process unsuccessful: if the process is the inventory process and the terminal does not receive the completion message, the terminal considers the inventory process unsuccessful; if the process is the access process and the terminal does not receive the completion message, the terminal considers the access process unsuccessful and sets the state of the terminal to an access state; if the process is the access process and the terminal does not receive the completion message, the terminal considers the access process unsuccessful, and the terminal falls back to the state before receiving the downlink proprietary message.

In an embodiment, if the base station does not receive the response message, the first uplink proprietary message or the second uplink proprietary message sent by the target terminal, the base station sends a retransmission message to the target terminal such that the target terminal re-sends the response message, the first uplink proprietary message or the second uplink proprietary message. In a specific embodiment of the present application, considering that the terminal does not have a Hybrid Automatic Repeat reQuest (HARQ) or Automatic Repeat reQuest (ARQ) mechanism, that is, the terminal does not have a mechanism for retransmitting data packets, the base station may not be able to receive the message sent by the terminal due to, for example, deterioration of the signal quality. If the process which has not been completed is re-performed, the process will become complicated, so it is better to trigger the terminal to re-transmit the data packet. Therefore, a message that triggers retransmission is introduced in the embodiment of the present application. After the terminal sends a first message to the base station, the terminal needs to store the first message. When the base station does not receive the first message, the base station may send a second message (the retransmission message) to trigger the terminal to re-transmit the first message. After the terminal receives the second message, the terminal re-transmits the first message. The retransmission message may include a retransmission indication bit, for indicating that the message is for triggering the terminal to perform a retransmission; a message type for retransmission, for indicating which message needs to be re-transmitted by the terminal; the number of retransmissions, for indicating how many times the terminal needs to send the message; a terminal identity for retransmission, for indicating which terminal needs to perform the retransmission. If the terminal receives the retransmission message within a certain period of time after the terminal sends the first message, the terminal performs the message retransmission. If the terminal does not receive the retransmission message within a period of time after the terminal sends the first message, the terminal releases the stored message. If the terminal receives the retransmission message after a period of time after the terminal sends the first message, the terminal does not perform the message retransmission. The terminal performs the retransmission according to the indication of the retransmission message, and the re-sent message may be a message indicated in the retransmission message or may by default be a message recently sent by the terminal.

In an embodiment, the second broadcast message may further include an operation identity, an operation state or an identity assigned to the terminal by the base station. When a new terminal enters the coverage of the base station, the base station may, according to the operation identity corresponding to each terminal, identify among all the terminals in the coverage the terminals that have been operated and the terminals that have not been operated, and perform an inventory operation on the terminals that have not been operated without repeating the inventory operation on the terminals that have been operated. Alternatively, the base station may, according to the operation completion state corresponding to each terminal, identify among all the terminals in the coverage the terminals that have been operated and the terminals that have not been operated, and perform an inventory operation on the terminals that have not been operated without repeating the inventory operation on the terminals that have been operated. Alternatively, the base station may, according to the identities assigned by the base station to the terminals that have been operated, identify among all the terminals in the coverage the terminals that have been operated and the terminals that have not been operated, and perform an inventory operation on the terminals that have not been operated without repeating the inventory operation on the terminals that have been operated. In a specific embodiment of the present application, in a mobile scenario, the terminals move between base stations. When the base station performs operations (including sending broadcast messages or proprietary messages), some terminals enter the coverage of the base station, and these terminals also need to be operated. However, when the base station performs operations on these terminals, the terminals that have been operated cannot be affected or the operations cannot be repeated on the terminals that have been operated. To improve the inventory efficiency of the base station, the following solutions may be adopted. 1) Each terminal needs to maintain one operation identity for indicating whether the terminal has been operated. In selection information, the base station may perform selection according to the operation identity. First, the base station sends the first broadcast message carrying the selection information, selects terminals, and sets the operation identities of these terminals to A. When the base station completes the operation on these terminals, the operation identities of the terminals are set to B. For example, if a terminal receives a downlink proprietary message and successfully feeds back an uplink proprietary message in the access process or if a terminal receives a downlink proprietary message from the base station and successfully feeds back an uplink proprietary message in the inventory process, the terminal receives an indication from the base station for indicating that the operation identity of the terminal is set to B. The base station then sends the second broadcast message carrying the selection information and selects terminals among the terminals whose operation identities are A. In this way, the terminals that have been operated are not selected. 2) Each terminal needs to maintain an operation completion state for indicating that the terminal has been operated. In selection information, the base station may perform selection according to the state. First, the terminals are all in the initial state. The base station sends the first broadcast message carrying the selection information and selects terminals. When the base station completes the operation on these terminals, these terminals enter the operation competition state. For example, if a terminal receives a downlink proprietary message and successfully feeds back an uplink proprietary message or if a terminal receives a downlink proprietary message from the base station and successfully feeds back an uplink proprietary message in the inventory process, the terminal receives an indication from the base station for indicating that the state of the terminal is the operation competition state, and the terminal enters a state related to the access process. The base station then sends the second broadcast message carrying the selection information and selects terminals among the terminals which are in the initial state or are not in the operation competition state. In this way, the terminals that have been operated are not selected. 3) Each terminal needs to maintain an identity assigned by the base station for indicating that the terminal has been operated. The base station may assign an identity to the terminal in the downlink proprietary message, and after the terminal receives the downlink proprietary message, the terminal maintains the identity. If a terminal does not have such an identity, it is indicated that the terminal has not been operated and may be considered a newly accessed terminal. First, the terminals are all in the initial state. The base station sends the first broadcast message carrying selection information and selects terminals. When the base station completes the identification on these terminals, the base station assigns an identity to each terminal in the first downlink proprietary message or the second downlink proprietary message. The terminals all maintain the identity, and the identities of these terminals are set to A or these terminals are considered the terminals which have been accessed. The base station then sends the second broadcast message carrying the selection information and selects terminals among the terminals whose identities are B or which are newly accessed. In this way, the terminals that have been operated are not selected.

In an embodiment, the base station may send a state indication message to the target terminal such that the target terminal transitions from a current state to a target state or from a current indication bit to a target indication bit or clears the terminal identity assigned by the base station, where the state indication message includes a state indication, an indication bit, a terminal identity, and whether to clear the terminal identity assigned by the base station. In a specific embodiment of the present application, the terminal may choose to enter a state according to the performed process. Although this method enables the terminal to determine by itself to perform reception or different processes in different states, this method also makes the state transition complicated and limits the flexible operation of the base station. Therefore, the indication from the base station to indicate the state which the terminal enters through a message or an indication bit for indicating the terminal is introduced in the embodiment of the present application. The base station may indicate the terminal through a first message, where the content carried by the first message may include: a state indication, for indicating which state the terminal should be set to; an indication bit, for indicating which indication bit the terminal should be set to; a terminal identity, for indicating which terminals are to be set; whether to clear the assigned terminal identity, for indicating whether the terminal clears the identity assigned by the base station.

In an embodiment, the first broadcast message, the second broadcast message, the first downlink proprietary message or the second downlink proprietary message may further include a group identity. In a specific embodiment of the present application, when the base station sends the first downlink proprietary message and if one message is sent to only one terminal, the base station needs to send many messages to multiple terminals. To reduce the signaling load of the downlink proprietary message, a group message may be introduced in the embodiment of the present application, and one single group message may be sent to multiple terminals. The group message may be a downlink proprietary message carrying data. When the base station sends the first downlink proprietary message, the base station may assign a group identity to the terminal. Therefore, when the base station sends the first downlink proprietary message, the first downlink proprietary message may further include a group identity; a terminal identity in the group, for indicating the identity of a terminal in the group having the group identity; and a sub-carrier or sub-channel for feeding back the uplink proprietary message in response to the group message. After the terminal receives the first downlink proprietary message, the terminal may store the above information. When the base station sends the group message, the group message may carry one group identity. For example, after the base station receives the first uplink proprietary message and when the base station sends the group message, the group message may include a group identity, a type of data which a terminal is requested to report, and downlink data content such as a read command. The terminal receives the group message, and if the terminal satisfies the group identity, the terminal feeds back the first uplink proprietary message on the sub-carrier or sub-channel designated in the first downlink proprietary message.

In an embodiment, the first broadcast message, the second broadcast message, the first downlink proprietary message or the second downlink proprietary message may further include sender-related information, where the sender-related information includes, but is not limited to, a cell identity, a base station identity, and a random number generated by the base station. In a specific embodiment of the present application, in a cellular network, one area may be covered by multiple base stations, and a terminal may receive information from multiple base stations. To avoid the terminal from being confused with information from different base stations, the solution may be as follows: the sender-related information is carried in a downlink message. The downlink message may be a broadcast message or a downlink proprietary message. The sender-related information may be a cell identity, a base station identity or a random number generated by the base station. The terminal only executes the messages that carry the same sender-related information. If the terminal receives a message that carries different sender-related information, the terminal discards the message and continues the process which the terminal is performing; the terminal terminates the current process and returns to the initial state; or, the terminal executes the new message. For example, a broadcast message carries a cell identity, and when the terminal receives the broadcast message, the terminal maintains the cell identity. If the terminal receives a broadcast message carrying a different cell identity, the terminal terminates the current process, clears the maintained information, for example, the previously maintained cell identity, the terminal identity assigned by the base station or the set terminal state or identity, and executes the broadcast message for the new cell. Alternatively, the sender-related information is carried in an uplink message. The uplink message may be a response message or an uplink proprietary message. The sender-related information may be a cell identity, a base station identity or a random number generated by the base station, received by the terminal. After the terminal executes the downlink message carrying the sender-related information, the terminal carries the sender-related information in the uplink message. If the base station receives the sender-related information and the sender-related information matches the sender-related information of the base station, the base station assumes that the terminal executes the previously sent message.

In the communication method provided in the embodiment of the present application, the base station first sends a first broadcast message to a terminal, where the first broadcast message includes at least one of the following: a message type, terminal selection information or resource indication information, and then the base station receives a response message, which is sent by one or more target terminals and in response to the first broadcast message, on a resource indicated by the resource indication information. That is, in the solution of the present application, the base station may carry the terminal selection information and the resource indication information when sending a broadcast message to the terminal such that the terminal, when receiving the broadcast message, may first detect whether the terminal information of the terminal matches the terminal selection information carried in the first broadcast message. If the terminal information matches the terminal selection information, the terminal sends a response message to the base station. If the terminal information does not match the terminal selection information, the terminal does not send the response message to the base station. The terminal may also send the response message on a resource indicated by the resource indication information. In the related art, an accessor solves the conflict through an inventory command to identify tags one by one, and the inventory process is inefficient. Therefore, compared with the related art, the communication method provided in the embodiment of the present application can effectively solve terminal conflict such that the base station can identify more terminals with higher identification efficiency. Moreover, the solution of the embodiment of the present application is simple and convenient to implement, is easy to popularize and can be broadly applied.

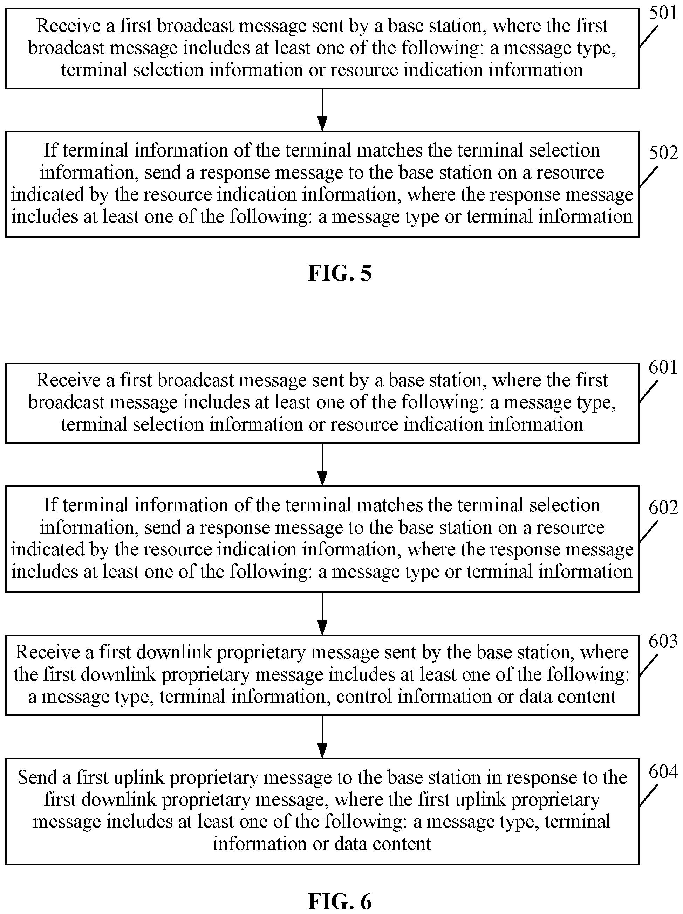

FIG. 5 is a fifth flowchart of a communication method according to an embodiment of the present application. The method may be executed by a communication apparatus or a terminal. The communication apparatus or the terminal may be implemented by software and/or hardware and may be integrated into any intelligent device having a network communication function. As shown in FIG. 5, the communication method may include S501 and S502.

In S501, a first broadcast message sent by a base station is received, where the first broadcast message includes at least one of the following: a message type, terminal selection information or resource indication information.

In an embodiment, the terminal may receive the first broadcast message sent by the base station. The first broadcast message includes at least one of the following: a message type, terminal selection information or resource indication information. Further, the first broadcast message may include a preamble sequence and check information. The resource indication information in the embodiment of the present application is used for informing the terminal of the resource on which the terminal sends a response message to solve a terminal conflict. In an embodiment, the resource indication information may be information through which the base station indicates a frequency domain-related resource to the terminal. In an embodiment, the resource indication information may include a frequency interval of a sub-carrier or a frequency interval of a sub-channel, an available sub-carrier range or an available sub-channel range, information related to a time domain for sending a response message, a format of a response message, and a modulation and coding scheme of a response message.

In S502, if terminal information of the terminal matches the terminal selection information, a response message is sent to the base station on a resource indicated by the resource indication information, where the response message includes at least one of the following: a message type or terminal information.

In the communication method provided in the embodiment of the present application, the base station first sends a first broadcast message to a terminal, where the first broadcast message includes at least one of the following: a message type, terminal selection information or resource indication information, and then the base station receives a response message, which is sent by one or more target terminals and in response to the first broadcast message, on a resource indicated by the resource indication information. That is, in the solution of the present application, the base station may carry the terminal selection information and the resource indication information when sending a broadcast message to the terminal such that the terminal, when receiving the broadcast message, may first detect whether the terminal information of the terminal matches the terminal selection information carried in the first broadcast message. If the terminal information matches the terminal selection information, the terminal sends a response message to the base station. If the terminal information does not match the terminal selection information, the terminal does not send the response message to the base station. When the terminal sends the response message to the base station, the terminal may send the response message on a resource indicated by the resource indication information. In the related art, an accessor solves the conflict through an inventory command to identify tags one by one, and the inventory process is inefficient. Therefore, compared with the related art, the communication method provided in the embodiment of the present application can effectively solve terminal conflict such that the base station can identify more terminals with higher identification efficiency. Moreover, the solution of the embodiment of the present application is simple and convenient to implement, is easy to popularize and can be broadly applied.

FIG. 6 is a six flowchart of a communication method according to an embodiment of the present application. The embodiment is further optimized and extended on the basis of the solution described above and can be combined with the optional implementations described above. As shown in FIG. 6, the communication method may include S601 to S604.

In S601, a first broadcast message sent by a base station is received, where the first broadcast message includes at least one of the following: a message type, terminal selection information or resource indication information.

In S602, if terminal information of the terminal matches the terminal selection information, a response message is sent to the base station on a resource indicated by the resource indication information, where the response message includes at least one of the following: a message type or terminal information.

In S603, a first downlink proprietary message sent by the base station is received, where the first downlink proprietary message includes at least one of the following: a message type, terminal information, control information or data content.

In S604, a first uplink proprietary message is sent to the base station in response to the first downlink proprietary message, where the first uplink proprietary message includes at least one of the following: a message type, terminal information or data content.

In an embodiment, the terminal may receive a state indication message sent by the base station such that the terminal transitions from a current state to a target state or from a current indication bit to a target indication bit or clears the terminal identity assigned by the base station, where the state indication message includes a state indication, an indication bit, a terminal identity, and whether to clear the terminal identity assigned by the base station.

In an embodiment, if the terminal makes an error or the terminal does not receive an acknowledgement message from the base station within a predetermined duration, the terminal enters a first state, where the first state is inconsistent with a state of the terminal when the terminal first receives the first broadcast message or the first state is inconsistent with a state of a terminal which does not make an error or receives the acknowledgement message within the predetermined duration; the terminal enters a second state, where a frequency-domain resource or a time-domain resource occupied by the terminal for sending the response message in the second state is inconsistent with a frequency-domain resource or a time-domain resource occupied for sending the response message by a terminal which does not make an error or receives the acknowledgement message within the predetermined duration; or an inventory identity is set in the second state, where the inventory identity is inconsistent with an inventory identity of a terminal which does not make an error or receives the acknowledgement message within the predetermined duration.

In an embodiment, the terminal may further receive a second broadcast message sent by the base station, and if a first state, a second state or an inventory identity carried by the second broadcast message is consistent with the first state, the second state or the inventory identity of the terminal, the terminal responds.

In an embodiment, the terminal may further receive a second broadcast message sent by the base station, and if an operation identity, an operation state, a terminal identity or sender-related information carried by the second broadcast message is inconsistent with an operation identity, an operation state, a terminal identity or sender-related information of the terminal, the terminal does not respond.

In an embodiment, the terminal may further receive a second downlink proprietary message sent by the base station, where the second downlink proprietary message includes at least one of the following: a message type, a terminal identity, a random number generated by the terminal or a type of data which the terminal is requested to report; and the terminal sends a second uplink proprietary message to the base station in response to the second downlink proprietary message, where the second uplink proprietary message includes at least one of the following: a message type, a terminal identity, data content or a designated sub-carrier or a designated sub-channel.

In an embodiment, when the terminal fees back the first uplink proprietary message or the second uplink proprietary message, the terminal receives the state indication message sent by the base station, or the terminal performs an access process, the terminal changes an operation identity and an operation state.

In an embodiment, when the terminal receives the first downlink proprietary message or the second downlink proprietary message sent by the base station and the first downlink proprietary message or the second downlink proprietary message carries an identity assigned to the terminal, the terminal maintains the identity.

In an embodiment, the terminal receives a second broadcast message sent by the base station, where the second broadcast message includes at least one of the following: a message type, terminal selection information or resource indication information.

In an embodiment, if the sender-related information carried by the first broadcast message, the second broadcast message, the first downlink proprietary message or the second downlink proprietary message is the same as predetermined sender-related information, the terminal executes the first broadcast message, the second broadcast message, the first downlink proprietary message or the second downlink proprietary message; if the sender-related information carried by the first broadcast message, the second broadcast message, the first downlink proprietary message or the second downlink proprietary message is different from the predetermined sender-related information, the terminal discards the first broadcast message, the second broadcast message, the first downlink proprietary message or the second downlink proprietary message, the terminal is restored to an initial state, or the terminal executes the first broadcast message or the first downlink proprietary message.

In the communication method provided in the embodiment of the present application, the base station first sends a first broadcast message to a terminal, where the first broadcast message includes at least one of the following: a message type, terminal selection information or resource indication information, and then the base station receives a response message, which is sent by one or more target terminals and in response to the first broadcast message, on a resource indicated by the resource indication information. That is, in the solution of the present application, the base station may carry the terminal selection information and the resource indication information when sending a broadcast message to the terminal such that the terminal, when receiving the broadcast message, may first detect whether the terminal information of the terminal matches the terminal selection information carried in the first broadcast message. If the terminal information matches the terminal selection information, the terminal sends a response message to the base station. If the terminal information does not match the terminal selection information, the terminal does not send the response message to the base station. The terminal may also send the response message on a resource indicated by the resource indication information. In the related art, an accessor solves the conflict through an inventory command to identify tags one by one, and the inventory process is inefficient. Therefore, compared with the related art, the communication method provided in the embodiment of the present application can effectively solve terminal conflict such that the base station can identify more terminals with higher identification efficiency. Moreover, the solution of the embodiment of the present application is simple and convenient to implement, is easy to popularize and can be broadly applied.

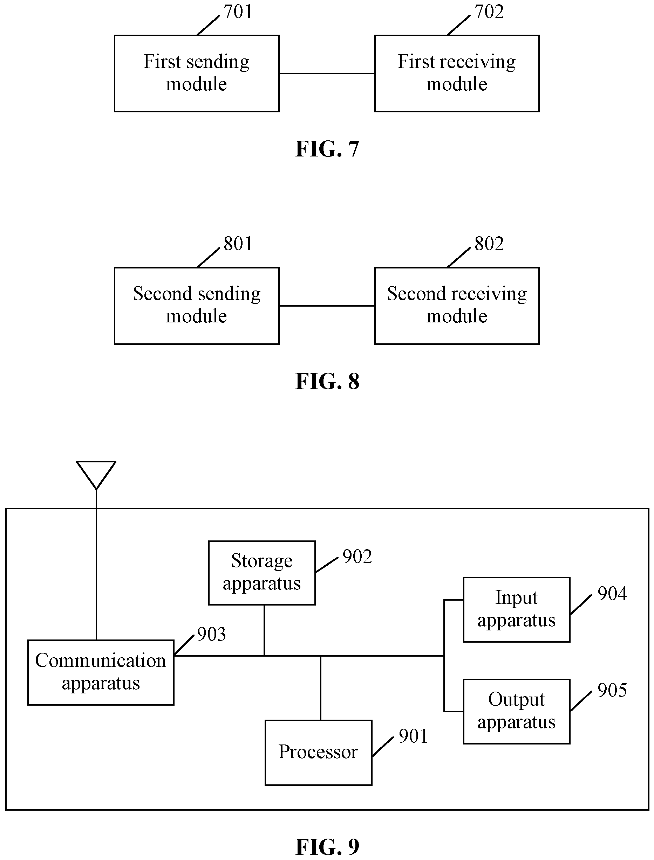

FIG. 7 is a first structure diagram of a communication apparatus according to an embodiment of the present application. As shown in FIG. 7, the communication apparatus may include a first sending module 701 and a first receiving module 702. The first sending module 701 is configured to send a first broadcast message to a terminal, where the first broadcast message includes at least one of the following: a message type, terminal selection information or resource indication information. The first receiving module 702 is configured to receive a response message, which is sent by one or more target terminals and in response to the first broadcast message, on a resource indicated by the resource indication information, where the response message includes at least one of the following: a message type or terminal information.

FIG. 8 is a second structure diagram of a communication apparatus according to an embodiment of the present application. As shown in FIG. 8, the communication apparatus may include a second sending module 801 and a second receiving module 802. The second receiving module 802 is configured to receive a first broadcast message sent by a base station, where the first broadcast message includes at least one of the following: a message type, terminal selection information or resource indication information. The second sending module 801 is configured to, if terminal information of the terminal matches the terminal selection information, send a response message to the base station on a resource indicated by the resource indication information, where the response message includes at least one of the following: a message type or terminal information.

The above communication apparatus can execute the method provided in any embodiment of the present application and has functional modules and effects for executing the method. For technical details not described in detail in the embodiment, reference may be made to the communication method provided in the embodiments of the present application.

FIG. 9 is a structure diagram of a communication node according to an embodiment of the present application. As shown in FIG. 9, the communication node provided by the present application may be a base station or a terminal. The communication node includes one or more processors 901 and a storage apparatus 902. One or more processors 901 may be provided in the communication node, and one processor 901 is illustrated as an example in FIG. 9. The storage apparatus 902 is configured to store one or more programs, and the one or more programs are executed by the one or more processors 901 to cause the one or more processors 901 to implement the communication method described in the embodiments of the present application.

The communication node further includes a communication apparatus 903, an input apparatus 904 and an output apparatus 905.

The processor 901, the storage apparatus 902, the communication apparatus 903, the input apparatus 904 and the output apparatus 905 in the communication node may be connected via a bus or in other manners, and the connection via a bus is illustrated as an example in FIG. 9.

The input apparatus 904 may be configured to receive inputted digital or character information and generate key signal input related to user settings and function control of the communication node. The output apparatus 905 may include a display device such as a display screen.

The communication apparatus 903 may include a receiver and a sender. The communication apparatus 903 is configured to perform communication under the control of the processor 901.

As a computer-readable storage medium, the storage apparatus 902 may be configured to store software programs, computer-executable programs, and modules such as program instructions/modules corresponding to the communication method described in the embodiments of the present application (for example, the first sending module 701 and the first receiving module 702 in the communication apparatus). The storage apparatus 902 may include a program storage region and a data storage region. The program storage region may store an operating system and an application program required by at least one function. The data storage region may store data created depending on the use of the device. Additionally, the storage apparatus 902 may include a high-speed random-access memory and may further include a non-volatile memory such as at least one magnetic disk memory, a flash memory or another non-volatile solid-state memory. In some examples, the storage apparatus 902 may further include memories which are remotely disposed with respect to the processor 901. These remote memories may be connected to the communication node via a network. Examples of the preceding network include, but are not limited to, the Internet, an intranet, a local area network, a mobile communication network, and a combination thereof.

An embodiment of the present application further provides a storage medium. The storage medium is configured to store a computer program, and the computer program, when executed by a processor, causes the processor to implement any method in the present application. The storage medium is configured to store a computer program, and the computer program, when executed by a processor, causes the processor to implement any method in the embodiments of the present application.

For example, the method may be a communication method, and the method includes the following.

A first broadcast message is sent to a terminal, where the first broadcast message includes at least one of the following: a message type, terminal selection information or resource indication information; and a response message, which is sent by one or more target terminals and in response to the first broadcast message, on a resource indicated by the resource indication information is received, where the response message includes at least one of the following: a message type or terminal information.

The computer storage medium in the embodiments of the present application may adopt any combination of one or more computer-readable media. The computer-readable medium may be a computer-readable signal medium or a computer-readable storage medium. The computer-readable storage medium may be, but is not limited to, an electrical, magnetic, optical, electromagnetic, infrared or semiconductor system, apparatus or device, or any combination thereof. Examples (a non-exhaustive list) of the computer-readable storage medium include: an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium that can contain or store a program for use by or in connection with an instruction execution system, apparatus or device.

The computer-readable signal medium may include a propagated data signal with computer-readable program codes embodied therein, for example, in a baseband or as a part of a carrier wave. The data signal propagated may be in multiple forms, including but not limited to an electromagnetic signal, an optical signal or any suitable combination thereof. The computer-readable signal medium may be any computer-readable medium that is not a computer-readable storage medium and can communicate, propagate or transport a program for use by or in connection with an instruction execution system, apparatus or device.

The program codes included on the computer-readable medium may be transmitted via any suitable medium which includes, but is not limited to, a wireless medium, a wire, an optical cable, a radio frequency (RF) or any suitable combination thereof.

Computer program codes for performing operations of the present application may be written in one or more programming languages or combinations thereof. The programming languages include object-oriented programming languages such as Java, Smalltalk, and C++, and further include conventional procedural programming languages such as C language or similar programming languages. The program codes may be executed entirely on a user computer, partly on a user computer, as a stand-alone software package, partly on a user computer and partly on a remote computer, or entirely on a remote computer or a server. In the scenario involving the remote computer, the remote computer may be connected to the user computer through any type of network, including a local area network (LAN) or a wide area network (WAN), or may be connected to an external computer (for example, through the Internet using an Internet service provider).

The preceding are example embodiments of the present application and are not intended to limit the scope of the present application.

It is to be understood by those skilled in the art that the term "user terminal" covers any suitable type of wireless user device, for example, a mobile phone, a portable data processing apparatus, a portable web browser or a vehicle-mounted mobile station.

Generally speaking, the embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data or source or object codes written in any combination of one or more programming languages.

A block diagram of any logic flow among the drawings of the present application may represent program operations, may represent interconnected logic circuits, modules, and functions, or may represent a combination thereof. Computer programs may be stored in a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. A communication method, applied to a base station and comprising:
sending a first broadcast message to a terminal, wherein the first broadcast message comprises at least one of the following: a message type, terminal selection information or resource indication information; and
receiving a response message, which is sent by at least one target terminal and in response to the first broadcast message, on a resource indicated by the resource indication information, wherein the response message comprises at least one of the following: a message type or terminal information.

2. The method of claim 1, wherein the resource indication information comprises a frequency interval of a sub-carrier or a frequency interval of a sub-channel, an available sub-carrier range or an available sub-channel range, information related to a time domain for sending the response message, a format of the response message, and a modulation and coding scheme of the response message.

3. The method of claim 1, further comprising: sending a first downlink proprietary message to a target terminal among the at least one target terminal, wherein the first downlink proprietary message comprises at least one of the following:
a message type, terminal information, control information or data content; and
receiving a first uplink proprietary message sent by the target terminal in response to the first downlink proprietary message, wherein the first uplink proprietary message comprises at least one of the following: the message type, the terminal information or the data content.

4. The method of claim 1, further comprising:
sending a second broadcast message to a terminal, wherein the second broadcast message comprises at least one of the following: a message type, terminal selection information or resource indication information.

5. The method of claim 1, further comprising:
sending a second downlink proprietary message to a target terminal among the at least one target terminal, wherein the second downlink proprietary message comprises at least one of the following: a message type, a terminal identity, a random number generated by a terminal or a type of data which a terminal is requested to report; and
receiving a second uplink proprietary message sent by the target terminal in response to the second downlink proprietary message, wherein the second uplink proprietary message comprises at least one of the following: the message type, the terminal identity, data content, or a designated sub-carrier or a designated sub-channel.

6. The method of any one of claims 1 to 5, wherein the first broadcast message, the second broadcast message, the first downlink proprietary message or the second downlink proprietary message is a downlink signal, and the response message, the first uplink proprietary message or the second uplink proprietary message is an uplink signal; wherein the downlink signal is a signal which is sent by the base station on a downlink carrier or a downlink channel and received by a terminal on the downlink carrier or the downlink channel; the uplink signal is a signal which is sent by a terminal on an uplink sub-carrier or an uplink sub-channel and received by the base station on the uplink sub-carrier or the uplink sub-channel; a bandwidth of the downlink carrier or a bandwidth of the downlink channel is greater than or equal to a bandwidth of the uplink sub-carrier or a bandwidth of the uplink sub-channel; a center frequency point of the downlink carrier or a center frequency point of the downlink channel is same as or different from a center frequency point of the uplink sub-carrier or a center frequency point of the uplink sub-channel.

7. The method of any one of claims 1 to 5, wherein the first broadcast message or the second broadcast message is a broadcast message signal, the first downlink proprietary message or the second downlink proprietary message is a downlink proprietary signal, and the response message, the first uplink proprietary message or the second uplink proprietary message is an uplink signal; wherein a bandwidth of a downlink carrier or a downlink channel of the broadcast message signal is greater than or equal to a bandwidth of a downlink carrier or a downlink channel of the downlink proprietary signal; a center frequency point of the broadcast message signal is same as or different from a center frequency point of the downlink proprietary signal; the bandwidth of the downlink carrier or the downlink channel of the broadcast message signal is greater than or equal to a bandwidth of a sub-carrier or a sub-channel of the uplink signal; the center frequency point of the broadcast message signal is same as or different from a center frequency point of the uplink signal.

8. The method of claim 3 or 5, further comprising:
sending an acknowledgement message to the target terminal, wherein the acknowledgement message is an acknowledgement message of the base station to the response message, the first uplink proprietary message or the second uplink proprietary message.

9. The method of claim 3 or 5, further comprising:
in response to not receiving the response message, the first uplink proprietary message or the second uplink proprietary message sent by the target terminal, sending a retransmission message to the target terminal such that the target terminal re-sends the response message, the first uplink proprietary message or the second uplink proprietary message.

10. The method of claim 4, wherein the second broadcast message further comprises an operation identity, an operation state or an identity assigned to the terminal by the base station.

11. The method of claim 3, further comprising:
sending a state indication message to the target terminal such that the target terminal transitions from a current state to a target state or from a current indication bit to a target indication bit or clears a terminal identity assigned by the base station, wherein the state indication message comprises a state indication, an indication bit, a terminal identity, and whether to clear the terminal identity assigned by the base station.

12. The method of any one of claims 1 to 5, wherein the first broadcast message, the second broadcast message, the first downlink proprietary message or the second downlink proprietary message further comprises a group identity.

13. The method of any one of claims 1 to 5, wherein the first broadcast message, the second broadcast message, the first downlink proprietary message or the second downlink proprietary message further comprises sender-related information, wherein the sender-related information comprises a cell identity, a base station identity, and a random number generated by the base station.

14. A communication method, applied to a terminal and comprising:
receiving a first broadcast message sent by a base station, wherein the first broadcast message comprises at least one of the following: a message type, terminal selection information or resource indication information; and
in response to terminal information of the terminal matching the terminal selection information, sending a response message to the base station on a resource indicated by the resource indication information, wherein the response message comprises at least one of the following: a message type or terminal information.

15. The method of claim 14, wherein the resource indication information comprises a frequency interval of a sub-carrier or a frequency interval of a sub-channel, an available sub-carrier range or an available sub-channel range, information related to a time domain for sending the response message, a format of the response message, and a modulation and coding scheme of the response message.

16. The method of claim 14, further comprising:
receiving a first downlink proprietary message sent by the base station, wherein the first downlink proprietary message comprises at least one of the following: a message type, terminal information, control information or data content; and
sending a first uplink proprietary message to the base station in response to the first downlink proprietary message, wherein the first uplink proprietary message comprises at least one of the following: a message type, terminal information or data content.

17. The method of claim 16, further comprising:
receiving a state indication message sent by the base station such that the terminal transitions from a current state to a target state or from a current indication bit to a target indication bit or clears a terminal identity assigned by the base station, wherein the state indication message comprises a state indication, an indication bit, a terminal identity, and whether to clear the terminal identity assigned by the base station.

18. The method of claim 16, further comprising:
in response to the terminal making an error or the terminal not receiving an acknowledgement message from the base station within a predetermined duration, entering a first state, wherein the first state is inconsistent with a state of the terminal when the terminal first receives the first broadcast message or the first state is inconsistent with a state of a terminal which does not make an error or receives the acknowledgement message within the predetermined duration; entering a second state, wherein a frequency-domain resource or a time-domain resource occupied by the terminal for sending the response message in the second state is inconsistent with a frequency-domain resource or a time-domain resource occupied for sending the response message by a terminal which does not make an error or receives the acknowledgement message within the predetermined duration; or setting an inventory identity in the second state, wherein the inventory identity is inconsistent with an inventory identity of a terminal which does not make an error or receives the acknowledgement message within the predetermined duration.

19. The method of claim 14, further comprising:
receiving a second broadcast message sent by the base station, and in response to a first status, a second status or an inventory identity carried by the second broadcast message being consistent with the first status, the second status or the inventory identity of the terminal, making a response.

20. The method of claim 14, further comprising:
receiving a second broadcast message sent by the base station, and in response to an operation identity, an operation state, a terminal identity or sender-related information carried by the second broadcast message being inconsistent with an operation identity, an operation state, a terminal identity or sender-related information of the terminal, not making a response.

21. The method of claim 14, further comprising:
receiving a second downlink proprietary message sent by the base station, wherein the second downlink proprietary message comprises at least one of the following: a message type, a terminal identity, a random number generated by the terminal or a type of data which the terminal is requested to report; and
sending a second uplink proprietary message to the base station in response to the second downlink proprietary message, wherein the second uplink proprietary message comprises at least one of the following: a message type, a terminal identity, data content or a designated sub-carrier or a designated sub-channel.

22. The method of claim 16 or 21, further comprising:
in response to the first uplink proprietary message or the second uplink proprietary message being fed back, the state indication message sent by the base station being received, or an access process being performed, changing an operation identity and an operation state.

23. The method of claim 16 or 21, further comprising:
in response to the first downlink proprietary message or the second downlink proprietary message sent by the base station being received and the first downlink proprietary message or the second downlink proprietary message carrying an identity assigned to the terminal, maintaining the identity.

24. The method of claim 14, further comprising:
receiving a second broadcast message sent by the base station, wherein the second broadcast message comprises at least one of the following: a message type, terminal selection information or resource indication information.

25. The method of any one of claims 14 to 21, further comprising:
in response to sender-related information carried by the first broadcast message, the second broadcast message, the first downlink proprietary message or the second downlink proprietary message being same as predetermined sender-related information, executing the first broadcast message, the second broadcast message, the first downlink proprietary message or the second downlink proprietary message;
in response to the sender-related information carried by the first broadcast message, the second broadcast message, the first downlink proprietary message or the second downlink proprietary message being different from the predetermined sender-related information, discarding the first broadcast message, the second broadcast message, the first downlink proprietary message or the second downlink proprietary message; restoring the terminal to an initial state; or executing the first broadcast message or the first downlink proprietary message.

26. A communication apparatus, comprising a sending module and a receiving module;
the sending module is configured to send a first broadcast message to a terminal, wherein the first broadcast message comprises at least one of the following: a message type, terminal selection information or resource indication information; and
the receiving module is configured to receive a response message, which is sent by at least one target terminal and in response to the first broadcast message, on a resource indicated by the resource indication information, wherein the response message comprises at least one of the following: a message type or terminal information.

27. A communication apparatus, comprising a sending module and a receiving module;
the receiving module is configured to receive a first broadcast message sent by a base station, wherein the first broadcast message comprises at least one of the following: a message type, terminal selection information or resource indication information; and
the sending module is configured to, in response to terminal information of the terminal matching the terminal selection information, send a response message to the base station on a resource indicated by the resource indication information, wherein the response message comprises at least one of the following: a message type or terminal information.

28. A communication node, comprising:
at least one processor; and
a memory configured to store at least one program;
wherein the at least one program, when executed by the at least one processor, causes the at least one processor to implement the communication method of any one of claims 1 to 25.

29. A storage medium storing a computer program, wherein the program, when executed by a processor, causes the processor to implement the communication method of any one of claims 1 to 25.
